(19) Europäisches Patentamt

European Patent Office

Office européen des brevets

(11) EP 1 408 684 A1

(12) DEMANDE DE BREVET EUROPEEN

(43) Date de publication:
14.04.2004 Bulletin 2004/16

(51) Int Cl.⁷: H04N 5/44

(21) Numéro de dépôt: 03292351.8

(22) Date de dépôt: 25.09.2003

(84) Etats contractants désignés:
AT BE BG CH CY CZ DE DK EE ES FI FR GB GR
HU IE IT LI LU MC NL PT RO SE SI SK TR
Etats d'extension désignés:
AL LT LV MK

(30) Priorité: 03.10.2002 FR 0212233

(71) Demandeur: STMicroelectronics S.A.
92120 Montrouge (FR)

(72) Inventeur: Barnichon, Christophe
38000 Grenoble (FR)

(74) Mandataire: Verdure, Stéphane
Cabinet Plasseraud
65/67 rue de la Victoire
75440 Paris Cedex 09 (FR)

Remarques:
Une requête en rectification de certaines pages de
la description et de dessins a été présentée
conformément à la règle 88 CBE. Il est statué sur
cette requête au cours de la procédure engagée
devant la division d'examen (Directives relatives à
l'examen pratiqué à l'OEB, A-V, 3.).

(54) **Procédé et système d'affichage video avec recadrage automatique**

(57) Pour chaque ligne d'une image courante (1) d'une vidéo, on détermine la valeur d'un paramètre associé à la ligne, qui correspond à un nombre de pixels de référence (Px) de la ligne qui sont considérés comme noirs selon un premier critère déterminé. On détermine ensuite la première ligne non noire (ULi) et la dernière ligne non noire (BLi) de l'image courante pour servir de base à un recadrage automatique des images de la vidéo avant affichage, par exclusion à partir de la première ligne de l'image et de la dernière ligne de l'image, respectivement, des lignes de l'image (3,4) qui sont considérées comme noires selon un second critère déterminé basé sur ledit paramètre associé.

FIG.6.

**Description**

La présente invention se rapporte à l'affichage avec recadrage automatique (en anglais « pan and scan »), d'une vidéo sur un écran d'affichage notamment un écran de télévision.

Dans la présente description de l'invention, le terme "image" est utilisé de façon générique pour désigner indifféremment une image vidéo ou une trame vidéo. De plus, conformément au jargon de l'Homme du métier, on désigne par "vidéo active" la portion d'une image qui porte l'action, c'est-à-dire qui va de la première à la dernière ligne vidéo qui ne sont pas des lignes noires.

Les mots tels que "première", "dernière", et "suivante", lorsqu'ils se rapportent à des lignes de l'image, sont ici classiquement utilisés en référence à l'ordre de transmission des informations codant les lignes vidéo, suivant lequel les lignes vidéo de chaque image sont transmises successivement en commençant par la ligne du haut et en finissant par la ligne du bas de l'image. On notera que cette convention n'est pas affectée par le fait que les lignes vidéo sont en général transmises avec entrelacement, c'est-à-dire en deux champs pour une image. Un champ ("Field" en anglais) correspond à l'une des deux moitiés d'une image dans un système d'affichage entrelacé, une première moitié de l'image étant constituée des lignes impaires et une seconde moitié étant constituée des lignes paires.

Les écrans d'affichage disponibles présentent un rapport d'écran déterminé (aussi appelé format vidéo ou encore, en anglais, "aspect ratio" ou "aspect format"), c'est-à-dire le rapport largeur/hauteur d'une image. Par exemple, les téléviseurs standards ont un rapport d'écran de 1,33:1 (format 4/3 ou normalisé), c'est-à-dire qu'ils sont 1,33 fois plus large que haut. De même, les téléviseurs panoramiques ont un rapport d'écran de 1,78:1 (format 16/9 ou panoramique). Certains téléviseurs peuvent assurer l'affichage d'images sélectivement selon l'un ou l'autre de ces formats, voire selon d'autres formats (notamment, pour certains d'entre eux, un format 14/9). Par ailleurs, certains dispositifs d'affichage plus récents, comme les écrans LCD (de l'anglais "Liquid Crystal Display") ou les écrans à plasma, présentent des rapports d'écran de valeurs encore différentes.

D'un autre côté, les images vidéo à afficher ont un rapport d'écran qui peut varier selon l'origine de la vidéo. Ainsi, les vidéos obtenues par des caméras vidéo grand public telles que des caméscopes, ont généralement un format 4/3. Par contre, les films produits pour la télévision ont typiquement un format 16/9. En outre, les films de cinéma ont quant à eux un rapport d'écran de 2,35:1 (format Cinémascope) ou de 1,85:1 (format Panavision, format Vistavision, etc.), par exemple.

La diffusion vidéo normalisée selon les recommandations de l'ITU (International Telecommunication Union), anciennement le CCIR (Comité Consultatif International des Radiocommunications), implique un format 4/3 aussi bien pour les images ayant 525 lignes que celles ayant 625 lignes. Un film de cinéma, par exemple, est donc traité selon une technique dite "LetterBox" qui ajoute des bandes noires en haut et en bas des images originales (sans modification de celles-ci), afin que les images diffusées soient affichées sans déformation sur un téléviseur standard (format 4/3).

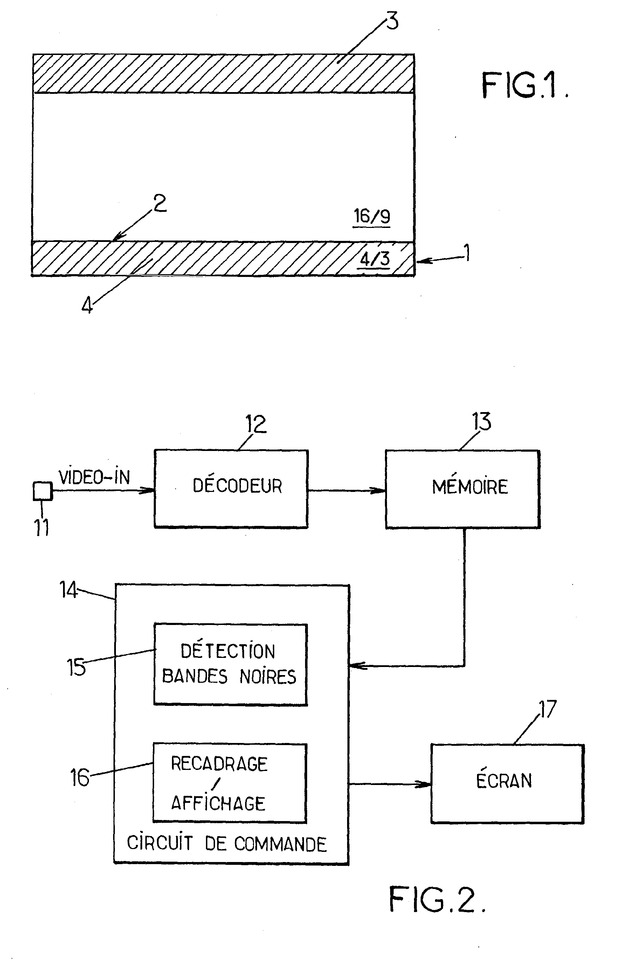

La figure 1 montre un exemple d'une image ainsi traitée en vue d'être diffusée selon les recommandations de l'ITU précitées. Une telle image est dite au format "LetterBox". Dans l'exemple représenté, le cadre extérieur 1 correspond à l'image au format 4/3, et le cadre intérieur 2 correspond à l'image au format 16/9 c'est-à-dire à la vidéo active. La différence entre ces deux images réside dans les bandes noires horizontales supérieure et inférieure respectivement référencées 3 et 4.

Le besoin existe d'un procédé permettant de détecter automatiquement le format d'une vidéo à afficher, afin de régler des paramètres d'affichage de manière à optimiser l'affichage. Un exemple d'utilisation de l'invention consiste à mettre en oeuvre un recadrage des images reçues au format "LetterBox", par exemple un zoom, afin que la vidéo active soit affichée en plein écran sur un écran au format 4/3, c'est-à-dire sans faire apparaître les bandes noires horizontales.

A cet effet, il est connu de détecter les lignes noires supérieure et inférieure de l'image vidéo, selon diverses méthodes proposées dans l'art antérieur. Ceci revient à détecter la vidéo active à l'intérieur de la vidéo.

Ces méthodes connues présentent néanmoins une précision insuffisante, en ce sens que la détection des lignes noires peut être défaillante dans un certain nombre de situations, dépendant du contenu des images. De plus, les méthodes connues présentent des limitations en terme de flexibilité (pas de possibilité de changements) ainsi qu'un coût supérieur lorsqu'elles sont mises en oeuvre sous forme matérielle (c'est-à-dire en « hardware »).

Selon un premier aspect, l'invention propose ainsi un procédé d'affichage d'une vidéo composée d'images comprenant chacune un nombre déterminé M de lignes et, dans chaque ligne, un nombre déterminé N de pixels, où M et N sont des nombres entiers. Le procédé comprend les étapes consistant à :

- stocker en mémoire des valeurs de pixels de référence (Px) d'une image courante de la vidéo, à savoir un nombre déterminé P de pixels de référence pour chaque ligne de l'image courante, où P est un nombre entier strictement inférieur à N ;

- pour chaque ligne de l'image courante, déterminer la valeur d'un paramètre associé à la ligne, qui correspond au nombre de pixels de référence de la ligne qui sont considérés comme noirs selon un premier critère déterminé ;

- déterminer la première ligne non noire et la dernière ligne non noire de l'image courante pour servir de base à un recadrage automatique des images de la vidéo avant affichage, par exclusion à partir de la première ligne de l'image et de la dernière ligne de l'image, respectivement, des lignes de l'image qui sont considérées comme noires selon un second critère déterminé basé sur ledit paramètre associé.

Un second aspect de l'invention se rapporte à un système d'affichage d'une vidéo composée d'images comprenant chacune un nombre déterminé M de lignes et, dans chaque ligne, un nombre déterminé N de pixels, où M et N sont des nombres entiers. Le système comprend :

- des moyens de mémorisation, pour stocker en mémoire des valeurs de pixels de référence d'une image courante de la vidéo, à savoir un nombre déterminé P de pixels de référence pour chaque ligne de l'image courante, où P est un nombre entier strictement inférieur à N ;

- des moyens pour déterminer, pour chaque ligne de l'image courante, la valeur d'un paramètre associé à la ligne, qui correspond au nombre de pixels de référence de la ligne qui sont considérés comme noirs selon un premier critère déterminé, et pour déterminer la première ligne non noire et la dernière ligne non noire de l'image courante par exclusion à partir de la première ligne de l'image et de la dernière ligne de l'image, respectivement, des lignes de l'image qui sont considérées comme noires selon un second critère déterminé basé sur ledit paramètre associé ; et,

- des moyens pour le recadrage automatique de l'image courante avant affichage, sur la base de ladite première ligne noire et de ladite dernière ligne noire.

Avantageusement, le sous-échantillonnage de l'image qui résulte de la prise en compte des seuls pixels de référence donne de meilleurs résultats pour la détection des bandes noires. Un autre avantage de l'invention est qu'elle peut être mise en oeuvre sous la forme logicielle (c'est-à-dire par « software »), en sorte que des changements sont possibles à moindre coût. En outre, le fait de ne traiter qu'une partie des pixels de l'image, formée des pixels de référence, diminue le nombre de calculs et les ressources nécessaires.

D'autres caractéristiques et avantages de l'invention apparaîtront encore à la lecture de la description qui va suivre. Celle-ci est purement illustrative et doit être lue en regard des dessins annexés sur lesquels :

- la figure 1 est un schéma illustrant une image au format "LetterBox" ;

- la figure 2 est un schéma synoptique d'un exemple de système d'affichage vidéo selon l'invention ;

- la figure 3 est un diagramme d'étapes illustrant un exemple de procédé d'affichage selon l'invention ;

- la figure 4 est un diagramme d'étapes donnant le détail d'un exemple de détection de la vidéo active dans une image ;

- la figure 5 est schéma illustrant un premier exemple de répartition des pixels de référence dans une ligne de l'image ; et,

- la figure 6 est schéma illustrant un second exemple de répartition des pixels de référence dans une ligne de l'image.

La figure 2 est un schéma synoptique d'un système d'affichage selon l'invention. Un tel système fait par exemple partie d'un téléviseur standard, panoramique, ou autre.

Le système 10 comprend une entrée 11 pour recevoir un signal vidéo d'entrée VIDEO_IN. Un tel signal est par exemple le signal délivré par le tuner du téléviseur. C'est un signal codé qui représente la vidéo à afficher. Le signal VIDEO_IN est délivré en entrée d'un circuit décodeur 12, qui assure son décodage.

Dans l'exemple considéré ici, la vidéo d'origine est codée conformément au standard ITU-R BT.601 de l'ITU (standard anciennement nommé CCIR 601), qui est le standard de codage en studio de la télévision numérique pour des formats d'image 4/3 (normalisé) et 16/9 (panoramique). Ce standard prescrit un traitement de la vidéo en composante, c'est-à-dire utilisant trois composantes pour le codage des pixels. Dans l'exemple, on considère un codage des pixels dans le système colorimétrique dit Y Cb Cr. Dans ce système, Y désigne, pour un pixel déterminé, la composante de luminance qui correspond à un signal noir et blanc, et Cb et Cr désignent les composantes de chrominance qui sont indépendantes de la luminance et correspondent à des signaux de différence de couleur, respectivement entre la luminance et la couleur bleue et entre la luminance et la couleur rouge.

Néanmoins, il apparaît immédiatement à l'Homme du métier que l'invention de se limite nullement à cet exemple. En particulier le codage en composante des pixels peut être un codage dans le système colorimétrique RVB (Rouge, Vert, Bleu) qui donne une représentation d'un pixel déterminé par la combinaison des valeurs de trois composantes de couleurs, à savoir rouge, vert et bleu.

En général, les données délivrées en sortie du décodeur 12 sont stockées de façon temporaire dans une mémoire 13. Cette mémoire est dite "mémoire de champ" ("Field Memory" en anglais) car les données d'une image sont avantageusement stockées par champ. La pratique actuelle pour la télévision diffusée en analogique consiste en effet à transmettre successivement deux champs par image car les normes d'affichage en vigueur correspondent à un affichage entrelacé (le spot affiche les lignes impaires par un premier balayage de l'écran, puis les lignes paires par un second balayage). Néanmoins, certains systèmes de transmission en numérique prévoient la transmission par trame, une trame ("Frame" en anglais) correspondant à une image complète.

La capacité de la mémoire 13 est telle qu'elle peut stocker au minimum les valeurs de pixels d'un champ.

Le procédé peut être mis en oeuvre quel que soit le format analogique ou numérique de la source vidéo. Pour des images analogiques, les valeurs de pixels peuvent par exemple être stockées de façon « raster ». Pour les images numériques (provenant d'un décodeur MPEG, par exemple), elles peuvent être stockées de façon « macroblock ».

Un circuit de commande 14 peut accéder en lecture aux valeurs de pixels stockées dans la mémoire 13. Le circuit 14 comprend un module 15 de détection de bandes noires dans une image à afficher courante, et un module 16 qui commande le recadrage et l'affichage de l'image courante.

Le circuit 14 pilote un écran 17 tel que notamment écran CRT (de l'anglais « Cathode Ray Tube »), un écran LCD ou un écran à plasma.

Le circuit 14 est par exemple un microprocesseur piloté par un programme d'application stocké de façon permanente dans la mémoire 13. Un tel microprocesseur est déjà présent dans la plupart des téléviseurs vendus actuellement. En variante, il peut s'agir d'un microcontrôleur correctement programmé. Dans les deux cas, les modules 15 et 16 sont avantageusement réalisés sous la forme d'unités logicielles. En variante encore, le circuit 14 peut être un circuit intégré dédié, ou un assemblage de composants matériels et/ou d'unités logicielles conçus spécialement pour la mise en oeuvre de l'invention. Notamment, le module 16 peut être réalisé sous forme d'un composant matériel piloté par microprocesseur ou microcontrôleur.

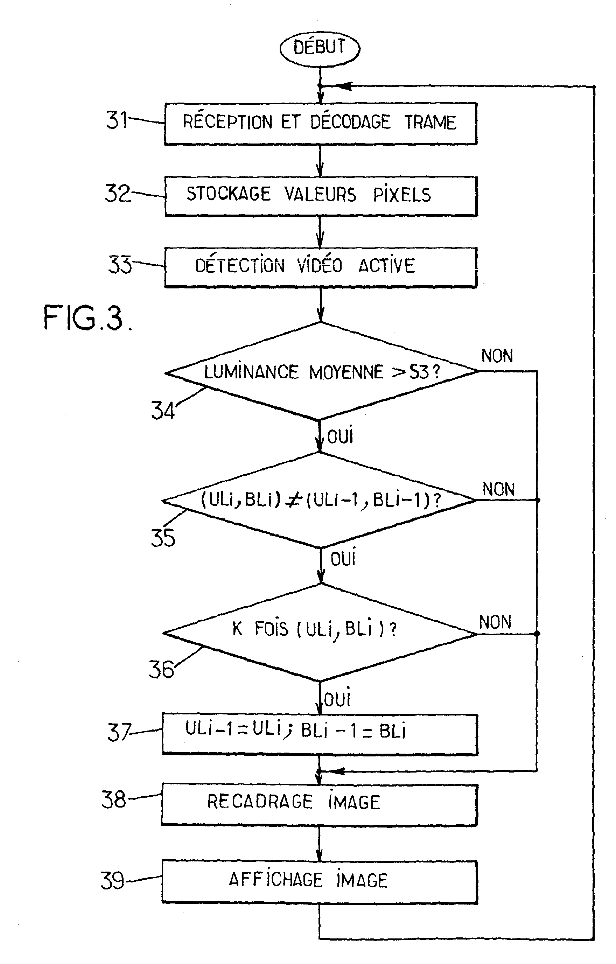

A la figure 3, on a représenté un diagramme des étapes d'un exemple de procédé d'affichage selon l'invention.

Dans une étape 31, on reçoit sur l'entrée 11 une trame vidéo, c'est-à-dire les données codant la totalité d'une image courante. Ces données sont décodées par le décodeur 12.

Dans une étape 32, les valeurs d'au moins certains des pixels de l'image sont stockées dans la mémoire 13. Seules les valeurs de certains pixels de l'image, ci-après appelés pixels de référence, sont nécessaires pour la mise en oeuvre de l'invention. C'est pourquoi, avantageusement, seules les valeurs de ces pixels de référence sont stockées dans la mémoire 12. Néanmoins, il est aussi possible de stocker en mémoire la valeur de tous les pixels de l'image. Dans une application où tous les pixels de l'image sont systématiquement stockés dans la mémoire de champ du téléviseur, la mise en oeuvre de l'invention n'implique aucun besoin supplémentaire en terme de capacité de mémorisation. Dans l'exemple, ce sont en fait les valeurs des composantes Y, Cb et Cr associées à chaque pixel considéré qui sont stockées dans la mémoire 13.

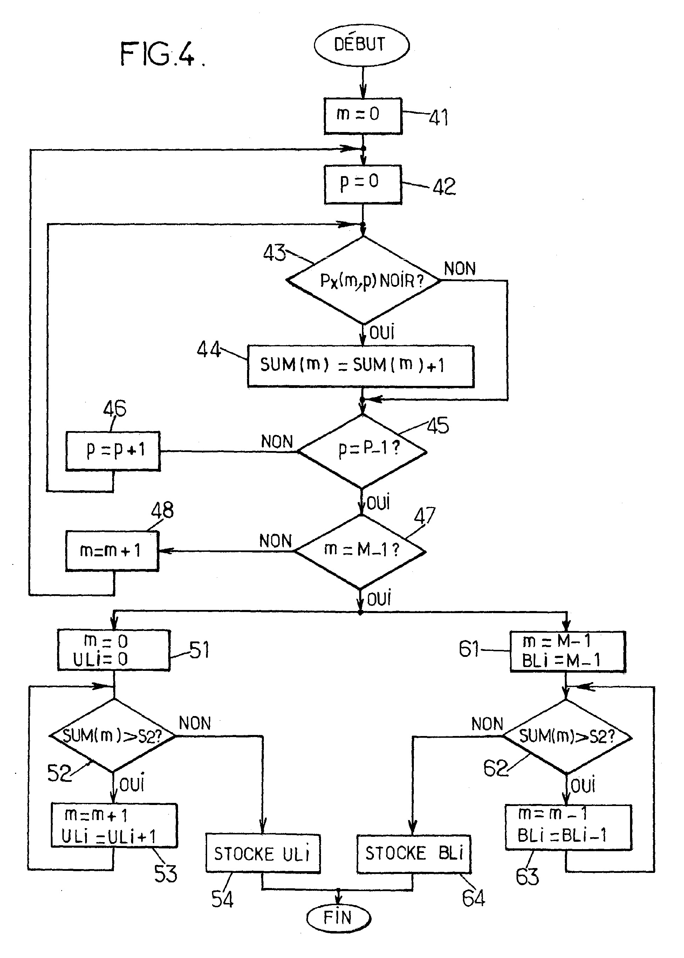

Dans une étape 33, on procède à la détection des bandes noires dans l'image. Cette étape est mise en oeuvre par le module 15 du circuit 14. Elle a pour but de déterminer la première ligne ULi et la dernière ligne BLi de la vidéo active de l'image courante, c'est-à-dire la première et la dernière ligne de l'image courante qui ne sont pas des lignes noires. Le détail d'un exemple de mise en oeuvre de cette étape 33 est donné ci-dessous en référence au diagramme d'étapes de la figure 4.

Pour la mise en oeuvre de la détection de l'image active, on définit deux indices m et p qui permettent de repérer les pixels de référence notés Px(m,p). L'indice m est un nombre entier compris entre 1 et M, où M est un nombre entier qui désigne le nombre de lignes vidéo de l'image. L'indice p est un nombre entier compris entre 1 et P, où P est un nombre entier qui désigne le nombre de pixels de référence dans chaque ligne. Le nombre P est strictement inférieur à un nombre N déterminé, qui est un nombre entier qui désigne le nombre de pixels constituant chaque ligne de l'image.

Pour chaque ligne d'indice m de l'image, c'est-à-dire pour m compris entre 1 et M, on définit un paramètre SUM(m) qui correspond au nombre de pixels de référence parmi les pixels Px(m,1) à Px(m,P) qui sont considérés comme noirs selon un premier critère déterminé. Plus ce paramètre est élevé et plus la ligne peut être considérée comme noire. C'est pourquoi on définit aussi un second critère qui permet de considérer une ligne comme noire ou non noire, ce second critère étant basé sur le paramètre SUM(m) associé à la ligne considérée.

Dans un premier groupe d'étape 41 à 48, on détermine la valeur du paramètre SUM(m) associé à chaque ligne d'indice m, avec m allant de 1 à M. Dans des étapes 51 à 54, on détermine la première ligne non noire de l'image courante, par exclusion des lignes qui sont considérées comme noires (selon le second critère précité) lorsqu'on examine successivement les lignes de l'image en partant de la première ligne de l'image. Dans des étapes 61 à 64, on détermine la dernière ligne non noire de l'image courante, par exclusion des lignes qui sont considérées comme noires lorsqu'on examine successivement les lignes de l'image en partant de la dernière ligne de l'image.

Dans des étapes d'initialisation 41 et 42, les indices m et p respectivement, sont initialisés à la valeur nulle.

Dans une étape 43, on se demande si le pixel de référence Px(m,p) peut être considéré comme noir selon le premier critère précité. Dans un mode de réalisation avantageux, lorsque la vidéo est une vidéo couleur représentée en composante de luminance et de chrominance, ce premier critère prend en compte la composante de luminance et, de préférence, également la ou les valeurs de composantes en chrominance du pixel. Dans l'exemple, le premier critère inclut ainsi la comparaison de la valeur de la composante de luminance Y à des seuils déterminés (seuils de luminance). Dans un mode de réalisation avantageux, il inclut en outre la comparaison de la composante de chrominance Cb et/ou de la composante de chrominance Cr à des autres seuils déterminés (seuils de chrominance).

Si le pixel Px(m,p) est considéré comme noir, alors dans une étape 44, le paramètre SUM(m) est incrémenté de une unité et on passe ensuite à une étape 45. Dans le cas contraire, on passe directement à l'étape 45.

A l'étape 45, on se demande si on a examiné tous les pixels de référence de la ligne d'indice m, en comparant la valeur de l'indice p au nombre P-1. Si p est égal à P-1 alors on passe à une étape 47. Dans le cas contraire, alors dans une étape 46 l'indice p est incrémenté de une unité et on revient en arrière à l'étape 43.

A l'étape 47, on se demande si on a examiné toutes les lignes de l'image, en comparant la valeur de l'indice m à la valeur M-1. Si m est égal à M-1, alors on a terminé l'évaluation du paramètre SUM(m) pour toutes les lignes de l'image. Dans le cas contraire, l'indice m est incrémenté de une unité dans une étape 48, et l'on revient en arrière à l'étape d'initialisation 42.

Un exemple de mise en oeuvre des étapes 41 à 48 ci-dessus, sous la forme de lignes de code d'un programme d'ordinateur (« pseudo-code »), est le suivant :

```
FOR m = 0 TO M

    FOR p = 0 TO P

        IF (

            y(m,p) < BLACK_LEVEL_LUMA + S1)

            and

            (

            (BLACK_LEVEL_CHROMA-S1' < cb(m,p) < BLACK_LEVEL_CHROMA + S1')

            or
```

(BLACK_LEVEL_CHROMA-S1' < cr(m,p) < BLACK_LEVEL_CHROMA + S1')

) THEN

SUM (m) = SUM (m) + 1

END IF

END FOR

END FOR


où y(m,p), cb(m,p) et cr(m,p) sont les valeurs des composantes du pixel Px(m,p) dans le système colorimétrique Y Cb Cr ;

où BLACK_LEVEL_LUMA est le niveau de luminance correspondant à la couleur noire (10h selon la recommandation CCIR 601 ) ;

où BLACK_LEVEL_CHROMA est le niveau de chrominance correspondant à la couleur noire (80h selon la recommandation CCIR 601) ; et

où S1 et S1' sont des valeurs fixes qui, en combinaison avec les niveaux BLACK_LEVEL_LUMA et BLACK_LEVEL_CHROMA, respectivement, définissent les seuils de luminance et les seuils de chrominance, respectivement, qui ont été présentés plus haut. Les premiers seuils de luminance sont BLACK_LEVEL_LUMA-S1 et BLACK_LEVEL_LUMA+S1. Les premiers seuils de chrominance sont BLACK_LEVEL_CHROMA-S1' et BLACK_LEVEL_CHROMA+S1'. Dans l'exemple, les valeurs S1 et S1' peuvent être égales à 5h et 10h respectivement.

Un second groupe d'étapes 51 à 54 consiste à déterminer les lignes du haut de l'image qui peuvent être considérées comme noires selon le second critère précité, et à en déduire l'indice ULi de la première ligne de l'image active (c'est-à-dire la première ligne non noire) de l'image courante, pour servir de base à un recadrage automatique des images avant affichage.

Dans une étape d'initialisation 51, les valeurs de l'indice ULi et l'indice m sont initialisées à la valeur nulle.

Dans une étape 52, on se demande alors si la valeur du paramètre SUM(m) est supérieure à un seuil déterminé S2. Dans un exemple, le seuil S2 est égal à $\frac{3}{4}{\times}P$. Néanmoins, toute valeur entre $\frac{1}{2}{\times}P$ et P est possible. En effet, dès lors que SUM(m) est supérieur à $\frac{1}{2}{\times}P$, la probabilité que la ligne soit noire est plus élevée que la probabilité qu'elle soit non noire.

Si SUM(m) est supérieur à S2, on considère que la ligne d'indice m est noire. Alors, dans une étape 53, l'indice m est incrémenté de une unité, et on revient en arrière à l'étape 52. Dans le cas contraire, on considère que la ligne d'indice m est non noire. C'est alors la première ligne non noire de l'image. Alors dans une étape 54, on stocke en mémoire la valeur ULi ainsi obtenue.

Un exemple de mise en oeuvre des étapes 51 à 54 ci-dessus, sous la forme de lignes de code d'un programme d'ordinateur (« pseudo code »), est le suivant :


m = 0

ULi = 0

WHILE (SUM(m) > S2)

ULi = ULi + 1

m = m + 1

END WHILE

Dans un groupe d'étapes 61 à 64, qui peuvent être réalisées après, avant, ou conjointement avec les étapes 51 à 54 précitées, on détermine les lignes du bas de l'image qui peuvent être considérées comme noires selon le même critère déterminé ou selon un critère similaire, et on en déduit la dernière ligne de la vidéo active (c'est-à-dire la dernière ligne non noire de l'image) pour servir de base au recadrage de l'image.

Dans une étape d'initialisation 61, les valeurs de l'indice BLi et de l'indice m sont initialisées à la valeur M.

Dans une étape 62, on compare ensuite la valeur du paramètre SUM(m) au seuil S2 précité (ou à un seuil qui peut être différent). Si SUM(m) est supérieur à S2, alors on considère que la ligne d'indice m est noire. Alors, dans une étape 63 on décrémente l'indice m de une unité. On revient ensuite à l'étape 62. Dans le cas contraire, on considère que la ligne d'indice m est non noire. Plus particulièrement, il s'agit alors de la dernière ligne non noire de l'image, c'est-à-dire la dernière ligne de la vidéo active. Alors, dans une étape 64, on stocke en mémoire la valeur BLi.

Un exemple de mise en oeuvre des étapes 61 à 64 ci-dessus sous la forme de lignes de code d'un programme d'ordinateur (« pseudo code »), est le suivant :

```
m = M

BLi = M

WHILE (SUM(m) > S2)

        BLi = BLi - 1

        m = m - 1

END WHILE
```

Une fois que l'on connaît la première ligne non noire ULi et la dernière ligne non noire BLi qui ont été déterminées pour l'image courante, on pourrait effectuer un recadrage de l'image courante avant son affichage en prenant en compte les lignes ULi et BLi. Toutefois, pour des raisons qui apparaîtront plus loin, on effectue de préférence une série de tests afin de déterminer si il convient de modifier des valeurs ULi-1 et BLi-1 désignant la limite supérieure et la limite inférieure, respectivement, de la vidéo active, qui étaient antérieurement prises en compte pour le recadrage des images. Ces valeurs correspondent aux indices respectifs de la première ligne non noire et de la dernière ligne non noire d'une image antérieure. Cette image antérieure n'est pas forcément l'image précédente (les termes "antérieure" et "précédente" étant ici employés en référence à l'ordre de diffusion des images de la vidéo).

De retour à la figure 3, on effectue en effet, après l'étape 33 de détection de la vidéo active, l'un ou plusieurs des tests des étapes 34, 35 et 36.

A l'étape 34, on détermine si la luminance moyenne de l'image courante est supérieure à un seuil S3. La luminance moyenne de l'image est préférentiellement déterminée à partir de la valeur de luminance y(m,p) des M x P pixels de référence, respectivement Px(m,p) avec m allant de 1 à M, et p allant de 1 à P. En variante, on peut également effectuer une moyenne en prenant en compte tous les pixels de l'image, bien que le calcul de cette moyenne soit alors pius iong. Dans un exemple, la valeur du seuil S3 est égale à 25h, cette valeur correspondant au dixième de la dynamique en luminance dans le cas d'une vidéo conforme à la recommandation CCIR 601. Si la luminance moyenne de l'image est inférieure à ce seuil, on peut considérer que les déterminations de lignes noires/non noires effectuées à l'étape 33 présentent une forte probabilité d'être erronées. C'est le cas par exemple d'une image correspondant à une scène très sombre (par exemple une action qui se déroule de nuit).

A l'étape 35, on se demande si la distance entre les lignes ULi et BLi qui ont été détectées à l'étape 33 et les lignes ULi-1 et BLi-1 qui avaient été prises en compte pour le dernier recadrage d'image effectué, est inférieure à un seuil déterminé. En effet, si cette distance est peut significative, alors il est inutile de procéder à une mise à jour des valeurs ULi-1 et BLi-1 qui sont prises en compte pour le recadrage des images. On évite ainsi d'effectuer des zooms trop fréquents qui risquent de provoquer un effet de tressautement de l'image désagréable pour l'utilisateur.

Dans un but similaire, l'étape 36 consiste à déterminer si les nouvelles dimensions de la vidéo active définies par les lignes ULi et BLi, ont été avec une certaine stabilité pour les K images précédentes, où K est un nombre entier. Dit autrement, on se demande à l'étape 36 si la distance entre la première ligne non noire et la dernière ligne non noire de l'image courante d'une part, et la première ligne non noire et la dernière ligne non noire, respectivement, de chacune des K images précédentes d'autre part, est inférieure à un seuil déterminé. Dans un exemple, K est égal à 10.

Si la réponse à l'un au moins des tests des étapes 34, 35 et 36 est négative, alors l'image courante est recadrée, dans une étape 38, puis affichée, dans une étape 39, sans mise à jour préalable des valeurs ULi-1 et BLi-1. Dans le cas contraire, on remplace les indices des lignes ULi-1 et BLi-1 par ceux des lignes ULi et BLi respectivement, dans une étape 37. Ensuite, on effectue un recadrage de l'image, à l'étape 38, et on passe à l'étape 39 où l'image recadrée est affichée. Le recadrage de l'étape 38 est typiquement un zoom, qui peut être un zoom avant (correspondant à un agrandissement de l'image) ou un zoom arrière (correspondant à un rétrécissement de l'image), sur la base des limites supérieures et inférieures de la vidéo active respectivement ULi-1 et BLi-1.

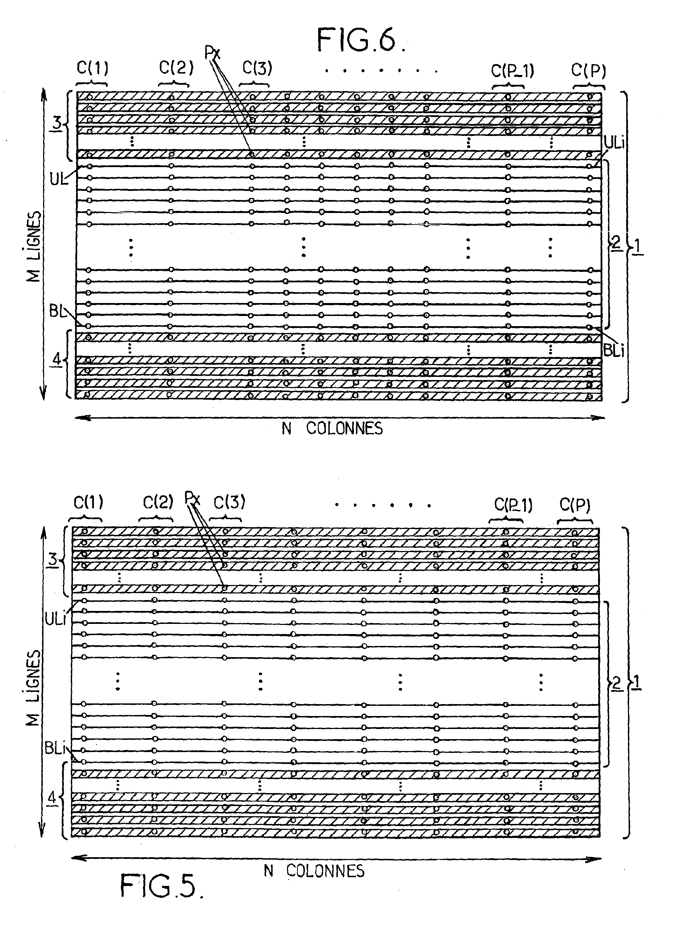

A la figure 5 et à la figure 6, on a représenté respectivement un premier et un second exemples de répartition des pixels de référence dans chaque ligne de l'image. Les lignes de l'image 1 sont représentées de façon disjointes sous la forme de traits épais horizontaux pour les lignes des bandes noires supérieures et inférieures respectivement 3 et 4, et sous la forme de traits fins horizontaux pour les lignes de l'image active 2. Les pixels de référence Px sont représentés par des points de couleur grise. Dans les exemples montrés sur les figures 5 et 6, la répartition des pixels de référence Px(m,1) à Px(m,P) de la ligne d'indice m, est la même quelque soit la valeur de l'indice m. Dit autrement, la répartition des pixels de référence dans une ligne est la même pour toutes les lignes. Les pixels de référence Px sont donc répartis dans l'image en étant disposés suivant des colonnes déterminées respectivement C(1) à C(P), chacune de ces colonnes comprenant un pixel Px par ligne. Ceci constitue un exemple non limitatif qui présente l'avantage de simplifier la mise en oeuvre de l'invention.

Dans l'exemple illustré par la figure 5, la répartition des P pixels de référence Px dans chaque ligne est sensiblement uniforme. Dit autrement, les colonnes C(1) à C(P) sont sensiblement régulièrement espacées.

Cette configuration permet de ne négliger aucune partie de l'image par rapport aux autres.

Dans l'exemple illustré par la figure 6, à l'inverse, la répartition des P pixels de référence Px dans chaque ligne est non uniforme. Dans cet exemple, plus de pixels Px sont situés au centre de la ligne qu'aux extrémités gauche et/ou droite de la ligne. Dit autrement, les colonnes C(1) à C(P) sont concentrées vers le milieu de l'image, leur densité y étant plus grande que vers le bord gauche et le bord droit de l'image.

Cette configuration permet de réduire la probabilité qu'une ligne de bandes noires 3 et 4 dans laquelle serait incrusté un logo (par exemple le logo du producteur des images) soit considérée comme une ligne non noire. Il est en effet courant que le producteur des images profite des bandes noires pour insérer son logo à des fins publicitaires. Ce logo est en général situé en haut à gauche, en haut à droite, en bas à gauche ou en bas à droite des images, au moins en partie dans les bandes noires. Ce logo ne représente pas un intérêt visuel pour l'utilisateur et il est préférable de considérer que les lignes qui le contiennent sont des lignes noires.

De plus, cette configuration permet de minimiser la probabilité que des lignes contenant dans des sous-titres soient considérées comme des lignes noires et éliminées de l'image affichée du fait du recadrage de l'image. En effet, de tels sous-titres sont classiquement contenus dans le milieu des lignes du bas de l'image, et apparaissent en caractères (lettres, chiffres, ou autres) de couleur blanche ou jaune, et dans tous les cas ont une luminance élevée.

Selon un exemple de mise en oeuvre avantageuse, l'étape 33 de détection des bandes noires se termine par une étape (non représentée) de détection de sous-titres dans les lignes noires du bas de l'image, à partir des valeurs des pixels de référence appartenant à ces lignes noires. Cette étape consiste par exemple à déterminer, parmi les (M-BLi)xP pixels de référence appartenant aux lignes de la bande noire inférieure 4, le nombre de ceux dont la valeur de la composante de luminance $y(m;p)$ est supérieure à un seuil WHITE_LEVEL déterminé. Dans l'exemple, la valeur du seuil WHITE_LEVEL est égale à 200h environ. Si ce nombre est supérieur à un pourcentage déterminé du nombre (M-BLi)xP, par exemple 2%, on considère que la probabilité d'avoir des sous-titres dans la bande 4 est importante. Dans ce cas, on remplace la valeur BLi déterminée à l'étape 33, qui correspond à l'indice de la dernière ligne non noire, par la valeur M-1 qui correspond à l'indice de la dernière ligne de l'image. De cette façon, l'image affichée est recadrée avant affichage, en cas de détection de sous-titres, sur la base de la première ligne non noire et de la dernière ligne de l'image. Dit autrement, on affiche la bande inférieure 4 contenant les sous-titres.

Selon un autre mode de mise en oeuvre, avantageux, la distribution des pixels de référence dans l'image varie dans le temps, par exemple d'une image à l'autre. Cette variation peut consister à faire changer la place des colonnes contenant des pixels de références, lorsque les pixels de référence sont disposés suivant des colonnes déterminées de l'image. Dit autrement, l'échantillonnage de l'image par les pixels de référence est dynamique au lieu d'être statique.

De cette manière, plus de pixels de l'image sont pris en compte au cours du temps (sur plusieurs images successives de la vidéo). On peut notamment faire en sorte que tous les pixels de l'image soient pixels de référence dans certaines au moins des images de la vidéo. De cette manière, la probabilité de fausse détection de lignes noires est réduite. Le procédé est aussi rendu plus robuste, et n'est pas mis en défaut par des vidéos spécifiques, notamment statiques (typiquement une mire).

La variation de la distribution des pixels de référence peut être aléatoire ou périodique, par exemple elle peut varier à chaque image, ou toutes les X images, où X est un nombre entier déterminé.

**Revendications**

1. Procédé d'affichage d'une vidéo composée d'images comprenant chacune un nombre déterminé M de lignes et, dans chaque ligne, un nombre déterminé N de pixels, où M et N sont des nombres entiers, le procédé comprenant les étapes consistant à :

   - stocker en mémoire des valeurs de pixels de référence (Px) d'une image courante (1) de la vidéo, à savoir un nombre déterminé P de pixels de référence pour chaque ligne de l'image courante, où P est un nombre entier strictement inférieur à N ;

   - pour chaque ligne de l'image courante, déterminer la valeur d'un paramètre associé à la ligne, qui correspond au nombre de pixels de référence de la ligne qui sont considérés comme noirs selon un premier critère déterminé ;

   - déterminer la première ligne non noire (ULi) et la dernière ligne non noire (BLi) de l'image courante pour servir de base à un recadrage automatique des images de la vidéo avant affichage, par exclusion à partir de la première ligne de l'image et de la dernière ligne de l'image, respectivement, des lignes de l'image qui sont considérées comme noires (3,4) selon un second critère déterminé basé sur ledit paramètre associé.

2. Procédé selon la revendication 1, suivant lequel la répartition des pixels de référence dans la ligne est sensiblement uniforme.

3. Procédé selon la revendication 1, suivant lequel la répartition des pixels de référence dans la ligne est non uniforme, plus de pixels étant situés au centre de la ligne qu'aux extrémités gauche et/ou droite de la ligne.

4. Procédé selon l'une quelconque des revendications précédentes, suivant lequel la répartition des pixels de référence dans la ligne est la même pour toutes les lignes de l'image vidéo.

5. Procédé selon l'une quelconque des revendications précédentes, suivant lequel la distribution des pixels de référence dans l'image varie au cours du temps.

6. Procédé selon l'une quelconque des revendications 1 à 5, suivant lequel la vidéo est une vidéo couleur représentée en composantes de luminance et de chrominance, et suivant lequel le premier critère inclut la comparaison de la valeur de la composante de luminance du pixel à des seuils déterminés.

7. Procédé selon l'une quelconque des revendications 1 à 5, suivant lequel la vidéo est une vidéo couleur représentée en composantes de luminance et de chrominance, et suivant lequel le premier critère inclut d'une part la comparaison de la valeur de la composante de luminance du pixel à des premiers seuils déterminés, et d'autre part la comparaison d'au moins une valeur de composante en chrominance du pixel à des seconds seuils déterminés.

8. Procédé selon l'une quelconque des revendications précédentes, suivant lequel le second critère inclut la comparaison de la valeur du paramètre associé à un seuil déterminé.

9. Procédé selon l'une quelconque des revendications précédentes, comprenant en outre une étape consistant à recadrer l'image courante avant affichage, sur la base de la première ligne non noire et de la dernière ligne non noire de l'image courante, ou sur la base de la première ligne non noire et de la dernière ligne non noire d'une image antérieure déterminée de la vidéo si l'une au moins des conditions suivantes n'est pas réalisée :

   1) la luminance moyenne de l'image courante est inférieure à un seuil déterminé ;

   2) la distance entre la première ligne non noire et la dernière ligne non noire de l'image courante d'une part, et la première ligne non noire et la dernière ligne non noire, respectivement, de ladite image antérieure d'autre part, est inférieure à un premier seuil déterminé ;

   3) la distance entre la première ligne non noire et la dernière ligne non noire de l'image courante d'une part, et la première ligne non noire et la dernière ligne non noire, respectivement, de chacune des K images précédentes d'autre part, est inférieure à un second seuil déterminé, où K est un nombre entier déterminé.

**10.** Procédé selon l'une quelconque des revendications précédentes comprenant en outre une étape de détection de sous-titres dans les lignes noires du bas de l'image, et en cas de détection de sous-titres, une étape consistant à recadrer l'image courante avant affichage sur la base de la première ligne non noire et de la dernière ligne de l'image.

**11.** Système d'affichage d'une vidéo composée d'images comprenant chacune un nombre déterminé M de lignes et, dans chaque ligne, un nombre déterminé N de pixels, où M et N sont des nombres entiers, le système comprenant :

- des moyens de mémorisation (13), pour stocker en mémoire des valeurs de pixels de référence (Px) d'une image courante (1) de la vidéo, à savoir un nombre déterminé P de pixels de référence pour chaque ligne de l'image courante, où P est un nombre entier strictement inférieur à N ;

- des moyens (15) pour déterminer, pour chaque ligne de l'image courante, la valeur d'un paramètre associé à la ligne, qui correspond au nombre de pixels de référence de la ligne qui sont considérés comme noirs selon un premier critère déterminé, et pour déterminer la première ligne non noire (ULi) et la dernière ligne non noire (BLi) de l'image courante par exclusion à partir de la première ligne de l'image et de la dernière ligne de l'image, respectivement, des lignes de l'image qui sont considérées comme noires (3,4) selon un second critère déterminé basé sur ledit paramètre associé ; et,

- des moyens (16) pour le recadrage automatique de l'image courante avant affichage, sur la base de ladite première ligne noire et de ladite dernière ligne noire.

**12.** Système selon la revendication 11, suivant lequel la répartition des pixels de référence dans la ligne est sensiblement uniforme.

**13.** Système selon la revendication 11, suivant lequel la répartition des pixels de référence dans la ligne est non uniforme, plus de pixels étant situés au centre de la ligne qu'aux extrémités gauche et/ou droite de la ligne.

**14.** Système selon l'une quelconque des revendications 11 à 13, suivant lequel la répartition des pixels de référence dans la ligne est la même pour toutes les lignes de l'image vidéo.

**15.** Système selon l'une quelconque des revendications 11 à 14 suivant lequel la distribution des pixels de référence dans l'image varie au cours du temps.

**16.** Système selon l'une quelconque des revendications 11 à 15, suivant lequel la vidéo est une vidéo couleur représentée en composantes de luminance et de chrominance, et suivant lequel le premier critère inclut la comparaison de la valeur de la composante de luminance du pixel à des seuils déterminés.

**17.** Système selon l'une quelconque des revendications 11 à 15, suivant lequel la vidéo est une vidéo couleur représentée en composantes de luminance et de chrominance, et suivant lequel le premier critère inclut d'une part la comparaison de la valeur de la composante de luminance du pixel à des premiers seuils déterminés, et d'autre part la comparaison d'au moins une valeur de composante en chrominance du pixel à des seconds seuils déterminés.

**18.** Système selon l'une quelconque des revendications 11 à 17, suivant lequel le second critère inclut la comparaison de la valeur du paramètre associé à un seuil déterminé.

**19.** Système selon l'une quelconque des revendications 11 à 18, comprenant en outre des moyens (16) pour recadrer l'image courante avant affichage sur la base de la première ligne non noire et de la dernière ligne non noire de l'image courante, ou sur la base de la première ligne non noire et de la dernière ligne non noire d'une image antérieure déterminée de la vidéo si l'une au moins des conditions suivantes n'est pas réalisée :

1) la luminance moyenne de l'image courante est inférieure à un seuil déterminé ;

2) la distance entre la première ligne non noire et la dernière ligne non noire de l'image courante d'une part, et la première ligne non noire et la dernière ligne non noire, respectivement, de ladite image antérieure d'autre part, est inférieure à un premier seuil déterminé ;

3) la distance entre la première ligne non noire et la dernière ligne non noire de l'image courante d'une part, et la première ligne non noire et la dernière ligne non noire, respectivement, de chacune des K images précédentes d'autre part, est inférieure à un second seuil déterminé, où K est un nombre entier déterminé.

20. Système selon l'une quelconque des revendications 11 à 19, comprenant en outre des moyens de détection de sous-titres dans les lignes noires du bas de l'image, et des moyens pour, en cas de détection de sous-titres, recadrer l'image sur la base de la première ligne non noire et de la dernière ligne de l'image.

FIG.1.

FIG.2.

EP 1 408 684 A1

FIG.3.

DÉBUT

31 — RÉCEPTION ET DÉCODAGE TRAME

32 — STOCKAGE VALEURS PIXELS

33 — DÉTECTION VIDÉO ACTIVE

34 — LUMINANCE MOYENNE > S3 ?  → NON

OUI

35 — $(UL_i, BL_i) \neq (UL_{i-1}, BL_{i-1})$ ?  → NON

OUI

36 — K FOIS $(UL_i, BL_i)$ ?  → NON

OUI

37 — $UL_{i-1} = UL_i ; BL_{i-1} = BL_i$

38 — RECADRAGE IMAGE

39 — AFFICHAGE IMAGE

FIG.4.

# FIG.6.

FIG.6.

# FIG.5.

FIG.5.

# EP 1 408 684 A1

**Office européen des brevets**

## RAPPORT DE RECHERCHE EUROPEENNE

Numéro de la demande

EP 03 29 2351

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 913 993 A (DEUTSCHE THOMSON-BRANDT) 6 mai 1999 (1999-05-06) | 1,3,5,6, 8,10,11, 13,15, 16,18,20 | H04N5/44 |
| A | * colonne 3, ligne 47 - colonne 4, ligne 10 * <br> * colonne 5, ligne 5 - colonne 6, ligne 14 * <br> --- | 9,19 | |
| A | US 5 956 092 A (EBIHARA ET AL.) 21 septembre 1999 (1999-09-21) <br><br> * colonne 1, ligne 60 - colonne 2, ligne 31 * <br> * colonne 13, ligne 42 - ligne 67 * <br> * colonne 14, ligne 37 - colonne 15, ligne 34 * <br> * colonne 21, ligne 31 - colonne 22, ligne 7 * <br> --- | 1-5, 9-15,19, 20 | |
| A | PATENT ABSTRACTS OF JAPAN vol. 2000, no. 01, 31 janvier 2000 (2000-01-31) -& JP 11 275485 A (VICTOR CO OF JAPAN LTD), 8 octobre 1999 (1999-10-08) * abrégé; figures 2,3 * <br> --- | 1,2,4,6, 8,11,12, 14,16,18 | **DOMAINES TECHNIQUES RECHERCHES (Int.Cl.7)** <br> H04N |
| A | EP 0 675 645 A (MATSUSHITA ELECTRIC INDUSTRIAL) 4 octobre 1995 (1995-10-04) <br><br> * colonne 5, ligne 9 - ligne 55 * <br> * colonne 6, ligne 44 - ligne 55 * <br> * colonne 8, ligne 32 - colonne 11, ligne 44 * <br> --- <br> -/-- | 1,6, 8-11,16, 18-20 | |

Le présent rapport a été établi pour toutes les revendications

| Lieu de la recherche | Date d'achèvement de la recherche | Examinateur |
|---|---|---|
| LA HAYE | 12 janvier 2004 | Berwitz, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

16

## RAPPORT DE RECHERCHE EUROPEENNE

Office européen
des brevets

Numéro de la demande

EP 03 29 2351

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 800 311 A (MATSUSHITA ELECTRIC INDUSTRIAL) 8 octobre 1997 (1997-10-08) * abrégé * * colonne 2, ligne 35 - ligne 39 * * colonne 4, ligne 16 - colonne 5, ligne 21 *<br><br>----- | 1,8,10, 11,18,20 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 12 janvier 2004 | Berwitz, P |

## ANNEXE AU RAPPORT DE RECHERCHE EUROPEENNE
## RELATIF A LA DEMANDE DE BREVET EUROPEEN NO.

EP 03 29 2351

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-01-2004

| Document brevet cité au rapport de recherche | | Date de publication | Membre(s) de la famille de brevet(s) | | Date de publication |
|---|---|---|---|---|---|
| EP 913993 | A | 06-05-1999 | EP | 0913993 A1 | 06-05-1999 |
| | | | CN | 1220546 A | 23-06-1999 |
| | | | EP | 0913994 A1 | 06-05-1999 |
| | | | JP | 11205714 A | 30-07-1999 |
| | | | US | 6366706 B1 | 02-04-2002 |
| US 5956092 | A | 21-09-1999 | JP | 2953280 B2 | 27-09-1999 |
| | | | JP | 7143419 A | 02-06-1995 |
| | | | CN | 1111429 A ,B | 08-11-1995 |
| | | | JP | 2947082 B2 | 13-09-1999 |
| | | | JP | 7170425 A | 04-07-1995 |
| | | | KR | 143019 B1 | 15-07-1998 |
| | | | US | 5699123 A | 16-12-1997 |
| JP 11275485 | A | 08-10-1999 | AUCUN | | |
| EP 675645 | A | 04-10-1995 | CN | 1115938 A ,B | 31-01-1996 |
| | | | DE | 69515190 D1 | 06-04-2000 |
| | | | DE | 69515190 T2 | 06-07-2000 |
| | | | EP | 0675645 A2 | 04-10-1995 |
| | | | JP | 3232950 B2 | 26-11-2001 |
| | | | JP | 8088810 A | 02-04-1996 |
| | | | KR | 190494 B1 | 01-06-1999 |
| | | | US | 5760840 A | 02-06-1998 |
| EP 800311 | A | 08-10-1997 | EP | 0800311 A1 | 08-10-1997 |
| | | | CN | 1167401 A ,B | 10-12-1997 |
| | | | DE | 69614365 D1 | 13-09-2001 |
| | | | DE | 69614365 T2 | 22-11-2001 |
| | | | JP | 3435301 B2 | 11-08-2003 |
| | | | JP | 9270966 A | 14-10-1997 |
| | | | SG | 54488 A1 | 16-11-1998 |

EPO FORM P0460

Pour tout renseignement concernant cette annexe : voir Journal Officiel de l'Office européen des brevets, No.12/82